# EUROPEAN PATENT SPECIFICATION

(11) **EP 2 188 557 B1**
(45) Date of publication and mention of the grant of the patent: **06.07.2011**
(21) Application number: 08788690.9
(22) Date of filing: 18.08.2008
(51) Int. Cl.: F16L 1/19

(54) **METHOD AND APPARATUS FOR LAYING OFFSHORE PIPELINE FROM A VESSEL**
VERFAHREN UND VORRICHTUNG ZUM VERLEGEN VON OFFSHORE-ROHRLEITUNGEN VON EINEM SCHIFF
PROCÉDÉ ET APPAREIL PERMETTANT DE POSER DES PIPELINES SOUS-MARINS DEPUIS UN NAVIRE

(30) Priority: 16.08.2007 GB 0715999
(43) Date of publication of application: 26.05.2010
(73) Proprietor: Subsea 7 Contracting (UK) Limited, Westhill Aberdeen Aberdeenshire AB32 6JZ (GB)
(72) Inventor: POSE, Jean-Baptiste, Aberdeen, Aberdeenshire AB12 3RY (GB); CRUICKSHANK, John, Duncan, Woodlands of Durris Kincardineshire AB31 6BF (GB)
(74) Representative: Cummings, Sean Patrick
(86) International application number: PCT/GB2008/050719
(87) International publication number: WO 2009/022189

(56) References cited:
- WO-A-00/05525
- WO-A-2004/085898
- GB-A- 2 299 646
- US-A1- 2002 009 333

## Description

### FIELD & BACKGROUND DISCUSSION

The present invention relates to pipeline laying apparatus and a method of laying pipeline from a vessel, particularly a reel lay vessel for laying continuous steel pipeline, generally referred to as rigid pipe.

When pipeline is being laid from a reel lay vessel, a portion of the pipeline is suspended between the vessel and the seabed (this is known as the catenary). The weight (tension) of this portion must be supported by the vessel's pipe laying equipment. The pipe laying equipment must also be capable of paying out the pipeline under this tension during the reel lay operation. Pipe is diverted (bent) from the reel into the laying axis, before the tension is applied. Straightening is also performed after the diverter, to remove the deformation of the pipe caused by reeling.

It is common in the industry to provide pipe laying vessels with tensioners, as described in WO 2004/085898 or WO 00/05525. Such a tensioners are described in detail in US 5,527,134 in order to meet this requirement. As an alternative to tensioners, some towers may be provided with a travelling clamp mounted on a hoist which allows the pipeline to be lowered during the laying operation. Each of these two alternative systems are, in many applications, relatively satisfactory; however, recently there has been an increasing demand for pipelines to be laid in much deeper water. In such situations, a much greater length of suspended pipeline is needed to span the vertical distance between the vessel and the seabed. This increased length of pipeline exerts a far greater load on the vessel's laying equipment with the result that many vessels are limited to laying pipe in relatively shallow water. Tensioners have limited capacity, and are very heavy items. Furthermore, when compared to a clamp, tensioners are relatively long, and are much heavier, for a given capacity. In situations when the pipe laying equipment is mounted on a raised tower, the use of such large tensioners results in a decrease in the overall vessel stability which can ultimately lead to a need for a larger vessel. Therefore, it is not straightforward to increase the capacity of such vessels, without compromising their stability and cost effectiveness.

According to the present invention, there is provided a method of laying offshore pipeline from a reel lay vessel, the method comprising:-
providing a pipeline laying tower with tensioner apparatus for receiving pipeline from a storage reel and gripping and tensioning the pipeline to suspend at least a portion of the pipeline while paying out the pipeline from the vessel;
providing a travelling clamp as an auxiliary means for suspending at least a portion of the pipeline from the vessel, the travelling clamp being provided on hoist means which allow it to stroke in the pipe laying direction along substantially the same axis as the tensioner apparatus; and
using the travelling clamp selectively in association with a further clamp to pay out pipeline at a tension greater than that achievable with the tensioner apparatus alone.

This allows a single tower to lower the pipeline from the vessel using either the travelling clamp or the tensioners as is appropriate to each particular case. In particular, although the laying process using the travelling clamp is generally slower than using a tensioner, the invention allows a vessel to lay exceptionally heavy or deep pipe on occasion, while having a tensioner of a more modest size, cost and weight, sufficient for efficient performance of the majority of tasks.

The method may include using the tensioner apparatus to support a substantial part of the tension in the suspended pipeline, while simultaneously supporting the remainder in the travelling clamp.

In such a case, one of the tensioner and the travelling clamp may be operated in a constant tension mode while the other is operated in a constant velocity mode. In that way, one of the devices acts to support a portion of the pipe weight, moving effectively as a slave of the other device.

The constant tension control may be applied to the tensioner apparatus, while constant velocity control is applied to the travelling clamp.

In using the travelling clamp to pay out the pipeline, the further clamp is used to hold the pipe stationary while the travelling clamp releases the pipe and returns to the top of its stroke to grip the pipe again and pay out another portion.

The method may then include repeating the above steps in order to provide semi-continuous deployment of the pipeline from the vessel.
The travelling clamp may be provided below the tensioner apparatus.

The further clamp may alternatively be provided above the tensioner apparatus. Alternatively the further clamp may be the same as a hang-off clamp located below the tensioner apparatus.

The hoist means may be provided with a stroke length which allows the travelling clamp to stroke below the water line.

The method may further include providing a straightener above the tensioner apparatus for reversing plastic deformation of the pipeline prior to applying tension to support the suspended weight.

According to the present invention, there is also provided an apparatus for laying offshore pipeline from a vessel, the apparatus comprising:-
a storage reel for prefabricated pipeline;
a pipeline laying tower;
tensioner apparatus mounted on the tower for receiving pipeline from a storage reel and gripping and tensioning the pipeline to suspend at least a portion of the pipeline while paying out the pipeline from the vessel;
a travelling clamp operable as an auxiliary means for suspending at least a portion of the pipeline from the vessel, the travelling clamp being provided on hoist means which allow it to stroke in the pipe laying direction along substantially the same axis as the tensioner apparatus; and
a further clamp operable in conjunction with the travelling clamp to pay out pipeline at a tension greater than that achievable with the tensioner apparatus alone. The apparatus may have features operable to perform the variations of the method as set forth above.

The hoist means may comprise a winch and cable arrangement which may provide a supportive connection to the pipeline laying tower on each side of the travelling clamp.

The tensioner apparatus may comprise track type tensioners.

The apparatus may be provided with the travelling clamp at a location which is below the tensioner apparatus and, the further clamp means at a location which is above the tensioner apparatus.

Preferably, further clamp means is provided and may comprise a hang-off clamp. Optionally, the further clamp means is provided below the bottom of the travelling clamp stroke length.

Alternatively, the further clamp means is provided above the top of the travelling clamp stroke length. In this embodiment, the hoist means and the travelling clamp means may be adapted to provide a stroke length which extends below the water line.

### BRIEF DESCRIPTION OF THE DRAWINGS

Embodiments of the invention will now be described, by way of example only, with reference to the accompanying drawings, in which:
Fig. 1 is a schematic illustration of a prior art pipe laying reel vessel not in accordance with the present invention where the laying tower has tensioners and a hang-off clamp which is located in the vessel deck;
Fig. 2 is a schematic rear view illustration of a first embodiment of the apparatus according to the present invention where a lower hang-off clamp is provided below the tensioners;
Fig. 3 is a schematic rear view illustration of a second embodiment of the apparatus according to the present invention where an upper hang-off clamp is provided above the tensioners;
Figs. 4A and 4B are schematic representations of the sequence of steps carried out in the pipe laying method according to the first embodiment of the invention; and
Figs. 5A and 5B are schematic representations of the sequence of steps carried out in the pipe laying method according to the second embodiment of the invention.

### DETAILED DESCRIPTION OF THE EMBODIMENTS

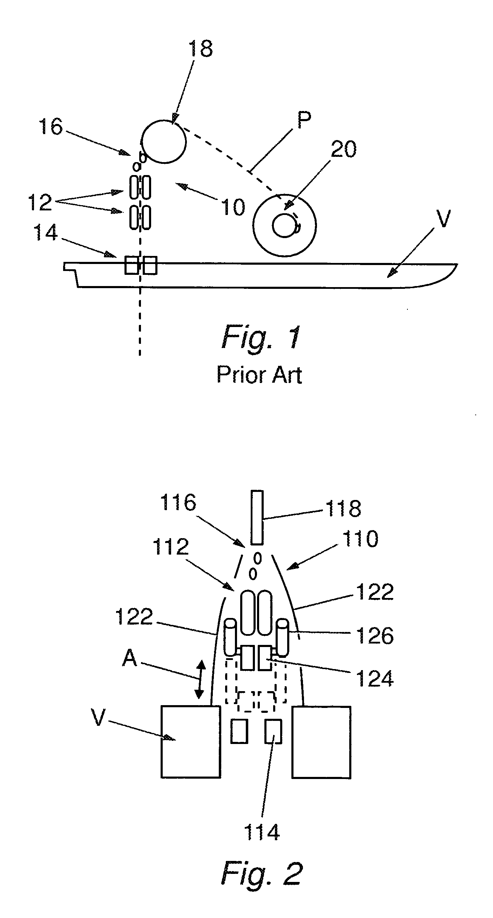

Referring to Fig. 1, a typical reel-based pipe laying vessel V has a pipeline laying tower 10 positioned at its rear end. The tower 10 is provided with typical pipe laying equipment including tensioners 12, a hang-off clamp 14 and straightener 16. A radius controller 18 is also provided at the top of the tower 10 and a reel 20, having pipeline reeled thereon, is provided on the deck of the vessel V. During the laying operation, the pipeline P is unreeled from the reel 20, passed over the radius controller 18 and down the tower 10 toward the seabed. As the pipeline P passes down the tower 10 it passes through straightener 16, tensioners 12 and hang-off clamp 14.

In this arrangement, the tensioners 12 control movement of the pipeline P down the tower 10 by applying a clamping force around the outer surface of the pipeline wall. This allows the weight of the pipeline between the vessel and the seabed to be suspended from the tensioners 12. The straightener 16 removes the bend which rigid steel pipe acquires through being wound onto the reel 20. The length of pipeline P suspended between the vessel and the seabed may be a number of kilometres long and may therefore exert a very large tension force on the tensioners 12. The diameter of the pipe, its wall thickness and gas/liquid contents also determine the weight of the pipe in water, and thus the tension required to support it during laying. During this operation, the hang-off clamp 14 is disengaged so that it has no effect on the pipeline P passing therethrough. The hang-off clamp 14 is normally only activated when it is necessary to temporarily remove the pipeline load from the tensioners 12. One example of when this might be necessary is during installation of an In-Line Tee or a Pipe Line End Termination on the pipeline P.

It will be appreciated by the skilled reader that the above described apparatus relies upon the vast majority of the pipeline tension being supported by the tensioners 12 (the remaining portion of the tension being supported by back tension in the reel mechanism). Hence, in such systems the capacity of the tensioners limits the depth and or type of pipe that can be laid. Tensioners for extreme tensions are extremely large, expensive and heavy, if available at all. Given that the majority of operations will concern lighter pipe and/or shallower operations, the provision of tensioners of very high capacity is rarely going to be a justifiable capital expense.

A novel pipelaying apparatus is shown schematically in Fig. 2. The pipeline laying tower 110 straddles a laying slot at the stern of the vessel. Tower 110 has legs 122 fixed to the vessel V deck by pivots and extendable braces (not shown) to allow it to tilt to match the departure angle of the laid pipeline. Straightener 116 and radius controller 118 are provided at the top of tower 110. In this embodiment a track type tensioner 112 is provided below the straightener 116 for clamping around an upper portion of the pipeline P being laid. A travelling clamp 124 is mounted on hoist means 126 provided below the tensioner 112.

It should be noted that although a single tensioner 112 is shown in Fig. 2, a pair of tensioners 112 or more could be provided like in the vessel of Fig. 1, depending upon the load required to be suspended, space concerns, and requirement for redundancy.

A further clamp means in the form of hang-off clamp 114 is provided in a laying slot at the rear of the vessel V and is capable of clamping around the outer circumference of the pipeline P in order to prevent it from moving therethrough. The hang-off clamp 114 is also releasable in order to allow free movement of the pipeline P therethrough, when desired.

Travelling clamp 124 has a similar clamping capability as the hang-off clamp 114. However, it is mounted on hoist means 126 comprising a pair of hoist and cables on either side of the tensioners 112. The hoist means 126 allow the travelling clamp 124 to be lowered and raised in the stroke direction A which is oriented in line with the direction of downward movement of the pipeline P along the tensioner axis during the laying operation (pipe laying direction). In this regard, the position of the travelling clamp 124 at the top of its stroke is depicted with solid lines and the position of the travelling clamp 124 at the bottom of its stroke with broken lines in Fig. 2.

A regulating mechanism may be provided to keep the reel drive (back-tension) in step with the drive for the tensioner 112. In such a mechanism the mounting for the diverter wheel 118 allows it to move slightly to absorb additional tension or slackness caused by differences in the speed of the reel and the tensioner. The drive system responds to this movement to increase or decrease the speed of the reel, or stop it entirely, in order to maintain a pre-set back-tension and avoid undue strain on either the pipe or the apparatus. An example of such a drive system is described in United States Patent No. 6,761,506.

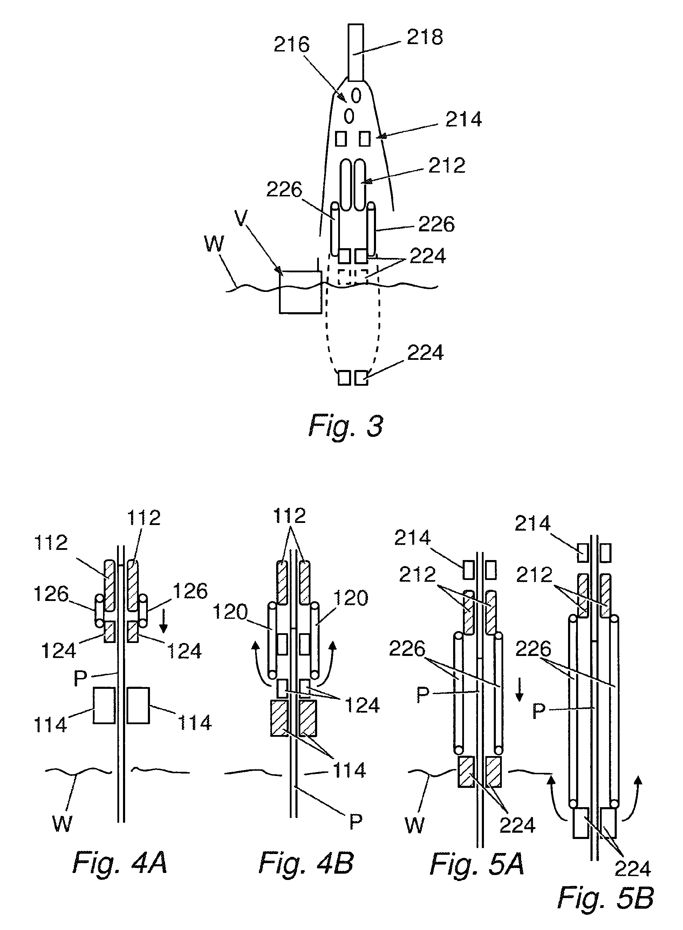

In a second embodiment, depicted in Fig. 3, the fixed clamp 214 is provided above the tensioners 212 rather than below them. (There may still be a hang-off clamp (not shown) provided at deck level, for normal operation with the tensioner 112 alone.) In addition, the maximum length of the hoist means 226 is greater than that of the first embodiment. This provides a much greater stroke length of the travelling clamp 224, and indeed allows it to stroke well below the water line W if desired. Furthermore, this arrangement has an additional advantage of allowing In-Line structures to be deployed without having to follow an oversized deployment procedure as will be described subsequently.

With particular reference to Figs. 4A and 4B, the steps involved in lowering a very heavy pipeline from the vessel according to the first embodiment will now be described. In the drawings, activated apparatus (that is, apparatus actively providing some clamping action to support the weight of the pipeline) are shaded and de-activated apparatus are unshaded.
1) The pipeline P is paid out from the vessel reel and passed through the tensioners 112. At this point the pipeline P is held by the tensioner 112. The tensioner may be controlled at this point to grip the pipe and support it up to a predetermined tension T1;
2) The travelling clamp 124 is also engaged (at the top of its stroke) around the pipeline P. The travelling clamp (more specifically a carriage drive on which the clamp is moved) is set to hold the pipe with whatever tension T2 is necessary to hold it stationary;
3) The travelling clamp 124 controller is set to a constant velocity mode which reduces the tension T2 as necessary to ensure that the pipe is lowered on the hoist means 126. Since the overall weight of the suspended pipe is greater than the tension T1 set by the tensioner, the tensioner allows the pipe to descend at the same rate and at the same time as the lowering action commanded by the control mechanism of travelling clamp 124;
4) This lowering stroke is continued until the travelling clamp 124 reaches the bottom of its stroke. At this point the travelling clamp 124 will be directly above the hang-off clamp 114 and will be prevented from moving any further in the pipe laying direction (velocity set to zero);
5) Rotation of the reel is now stopped and the hang-off clamp 114 is engaged (Fig. 4B) around the pipeline P, thereby holding the complete weight of the pipeline P (with optional assistance from the tensioner 112);
6) The clamping force of the travelling clamp 124 can now safely be removed from around the pipeline P, and the travelling clamp 124 reset to the top of its stroke, leaving the pipeline P behind, in the lowered position; and
7) Once the travelling clamp 124 has been reset to the top of its stroke, it is then re-engaged around the pipeline P and the hang-off clamp 114 can be released. Velocity can again be set to cause a downward motion.

The above describes one lowering stoke and one resetting stroke of the travelling clamp 124. This only lowers the pipeline P by a relatively small distance; it will be appreciated that the method can be performed in a repeated cycle such that continued lowering of the pipeline P is possible. This repeated interruption is a major reason why laying all product using the travelling clamp would be unattractive, even though it is useful for its ability to handle the greatest loads.

Furthermore, it should be noted that, in the simultaneous operation mode, at no point in the cycle is the full tension of the pipeline P suspended solely by the tensioner 112. In steps 1 to 5, the tension is optionally distributed between the tensioner 112 and the travelling clamp 124, and in steps 6 to 8, the tension is distributed between the tensioner 112 and the hang-off clamp 114. As the transfer of the tensions occurs, either the hang-off clamp 114 or the travelling clamp 124, or both, support the pipeline P tension. This has a considerable advantage when laying pipeline in deep water since, for a given length of pipeline, the maximum load exerted on the tensioners 112 throughout the laying operation is reduced compared to prior art methods which rely either on tensioners only or a travelling clamp only, to hold the pipeline P tension. The novel arrangement therefore allows smaller, less powerful tensioners, to be used for efficient operation in the majority of pipelaying tasks, while including the capacity to handle the large jobs with lower speed, but with much lower cost equipment than tensioners of such large capacity. The tension capacity of the tensioner 112 may be for example less than 1000t (tonnes), or less than 500t. The travelling clamp 124 and hang-off clamp 114 may have a tension capacity in excess of 1500t, or even 2000t.

Figs. 5A and 5B illustrate operation of the second embodiment (Fig. 3). As shown in Figs. 5A and 5B, the steps involved in activating the fixed clamp 214 and the travelling clamp 224 are effectively performed in the same sequence, albeit that the hang-off clamp 214 is located above the tensioners rather than below them.

The greater stroke length of the travelling clamp 224 in the second embodiment allows the pipeline P to be lowered by a greater distance in each lowering stroke. This can increase the maximum laying speed of the heaviest products since the time spent transferring loads between the fixed clamp 214 and the travelling clamp 224 and resetting the travelling clamp 224 to the top of its stroke is minimised per unit length of pipeline deployment. In other words the length of pipeline P which may be lowered in a single downward stroke is increased. In contrast with the Fig. 4 embodiment, this arrangement also allows In-Line structures, such as In-Line Tees to be deployed. In the Fig. 4 embodiment this is not possible since the travelling clamp 124 is incapable of lowering the In-Line Tee to a position which is low enough to allow the hang-off clamp to close around the line above the In-Line Tee. However, in the present embodiment, the greater stroke length allows the In-Line Tee to be lowered enough so that the hang of clamp can close around the line above the In-Line Tee.

Although in the above description, the laying of heavy product has been performed using the tensioner and travelling clamp in tandem, it should be understood that the invention encompasses also laying such items by the travelling clamp and fixed clamp alone, with the tensioner simply disengaged. It should also be appreciated that the methods described are intended for use on exceptional tasks, with the majority of pipe lay operations being performed using the tensioner alone. In that regard, the travelling clamp and any separate fixed clamp may be made demountable to free up space and reduce weight during less demanding operations.

While the apparatus has been shown mounted at the stern of a vessel, it may equally be mounted to lay pipe via a moonpool.

## Claims

1. A method of laying offshore pipeline from a reel lay vessel, the method comprising:-
providing a pipeline laying tower with tensioner apparatus (112) for receiving pipeline from a storage reel and gripping and tensioning the pipeline to suspend at least a portion of the pipeline while paying out the pipeline from the vessel;
providing a travelling clamp (124) as an auxiliary means for suspending at least a portion of the pipeline from the vessel, the travelling clamp being provided on hoist means which allow it to stroke in the pipe laying direction along substantially the same axis as the tensioner apparatus; and
using the travelling clamp selectively in association with a further clamp (114) to pay out pipeline at a tension greater than that achievable with the tensioner apparatus alone.

2. A method according to claim 1, further comprising using the tensioner apparatus to support a substantial part of the tension in the suspended pipeline, while simultaneously supporting the remainder in the travelling clamp.

3. A method according to claim 2, further comprising operating one of the tensioner and the travelling clamp in a constant tension mode while the other is operated in a constant velocity mode.

4. A method according to claim 3, further comprising applying the constant tension control to the tensioner apparatus, and applying the constant velocity control to the travelling clamp.

5. A method according to any preceding claim, wherein when using the travelling clamp to pay out the pipeline, the further clamp is used to hold the pipe stationary while the travelling clamp releases the pipe and returns to the top of its stroke to grip the pipe again and pay out another portion.

6. A method according to claim 5, further comprising repeating the steps of claims 1 to 5 in order to provide semi-continuous deployment of the pipeline from the vessel.

7. A method according to any preceding claim, including the step of providing the travelling clamp below the tensioner apparatus.

8. A method according to any of claims 1 to 6, including the step of providing the travelling clamp above the tensioner apparatus.

9. A method according to any preceding claim, wherein the hoist means strokes the travelling clamp by a length which allows the travelling clamp to stroke below the water line.

10. Apparatus for laying offshore pipeline from a vessel, the apparatus comprising:-
a storage reel for prefabricated pipeline;
a pipeline laying tower (110);
tensioner apparatus (112) mounted on the tower for receiving pipeline from a storage reel and gripping and tensioning the pipeline to suspend at least a portion of the pipeline while paying out the pipeline from the vessel;
a travelling clamp (124) operable as an auxiliary means for suspending at least a portion of the pipeline from the vessel, the travelling clamp being provided on hoist means which allow it to stroke in the pipe laying direction along substantial the same axis as the tensioner apparatus; and
a further clamp (114) operable in conjunction with the travelling clamp to pay out pipeline at a tension greater than that achievable with the tensioner apparatus alone.

11. Apparatus according to claim 10, wherein the hoist means comprises a winch and cable arrangement which provides a supportive connection to the pipeline laying tower on each side of the travelling clamp.

12. Apparatus according to either of claims 10 and 11, wherein the tensioner apparatus comprises track type tensioners.

13. Apparatus according to claims 10 to 12, wherein the travelling clamp is provided at a location which is below the tensioner apparatus and, the further clamp means is provided at a location which is above the tensioner apparatus.

14. Apparatus according to claims 10 to 13, wherein the further clamp means comprises a hang off clamp.

15. Apparatus according to claims 10 to 12, wherein the further clamp means is provided below the bottom of the travelling clamp stroke length.

## Patentansprüche

1. Verfahren zum Verlegen von Offshore-Rohrleitungen von einem Abrollverlegeschiff, wobei das Verfahren Folgendes beinhaltet:
Bereitstellen eines Rohrleitungsverlegeturms mit einer Spannvorrichtung (112) zum Aufnehmen von Rohrleitungen von einer Vorratstrommel und Ergreifen und Spannen der Rohrleitungen, um wenigstens einen Abschnitt der Rohrleitungen aufzuhängen, während die Rohrleitungen von dem Schiff ausgegeben werden;
Bereitstellen einer Laufklammer (124) als Hilfsmittel zum Aufhängen wenigstens eines Abschnitt der Rohrleitungen von dem Schiff, wobei die Laufklammer an Hubmitteln vorgesehen ist, die eine Bewegung in der Rohrverlegerichtung im Wesentlichen entlang derselben Achse wie die Spannvorrichtung zulässt; und
selektives Verwenden der Laufklammer in Verbindung mit einer weiteren Klammer (114) zum Ausgeben der Rohrleitungen mit einer Spannung, die größer ist als die, die nur mit der Spannvorrichtung allein erzielbar ist.

2. Verfahren nach Anspruch 1, das ferner die Verwendung der Spannvorrichtung zum Abstützen eines erheblichen Teils der Spannung in den aufgehängten Rohrleitungen umfasst, wobei der Rest in der Laufklammer gleichzeitig abgestützt wird.

3. Verfahren nach Anspruch 2, das ferner das Betreiben der Spannvorrichtung oder der Laufklammer in einem konstanten Spannungsmodus und das Betreiben des jeweils anderen der beiden in einem konstanten Geschwindigkeitsmodus beinhaltet.

4. Verfahren nach Anspruch 3, das ferner das Anwenden der konstanten Spannungsregelung auf die Spannvorrichtung und das Anwenden der konstanten Geschwindigkeitsregelung auf die Laufklammer beinhaltet.

5. Verfahren nach einem der vorherigen Ansprüche, wobei bei der Verwendung der Laufklammer zum Ausgeben der Rohrleitungen die weitere Klammer zum Festhalten des Rohres verwendet wird, während die Laufklammer das Rohr loslässt und zum oberen Ende ihres Hubs zurückkehrt, um das Rohr wieder zu erfassen und einen weiteren Abschnitt auszugeben.

6. Verfahren nach Anspruch 5, das ferner das Wiederholen der Schritte der Ansprüche 1 bis 5 beinhaltet, um ein teilkontinuierliches Installieren der Rohrleitungen von dem Schiff bereitzustellen.

7. Verfahren nach einem der vorherigen Ansprüche, das den Schritt des Bereitstellens der Laufklammer unterhalb der Spannvorrichtung beinhaltet.

8. Verfahren nach einem der Ansprüche 1 bis 6, das den Schritt des Bereitstellens der Laufklammer oberhalb der Spannvorrichtung beinhaltet.

9. Verfahren nach einem der vorherigen Ansprüche, wobei das Hubmittel die Laufklammer über eine solche Länge bewegt, dass die Laufklammer bis unter die Wasserlinie absinken kann.

10. Vorrichtung zum Verlegen von Offshore-Rohrleitungen von einem Schiff, wobei die Vorrichtung Folgendes umfasst:
eine Vorratstrommel für vorgefertigte Rohrleitungen;
einen Rohrleitungsverlegeturm (110);
eine Spannvorrichtung (112), die an dem Turm montiert ist, um Rohrleitungen von einer Vorratstrommel aufzunehmen und die Rohrleitungen zu erfassen und zu spannen, um wenigstens einen Teil der Rohrleitungen aufzuhängen, während die Rohrleitungen von dem Schiff ausgegeben werden;
eine Laufklammer (124), die als Hilfsmittel zum Aufhängen von wenigstens einem Teil der Rohrleitungen von dem Schiff betrieben werden kann, wobei die Laufklammer an Hubmitteln vorgesehen ist, die es zulassen, sie in der Rohrverlegerichtung im Wesentlichen entlang derselben Achse wie die Spannvorrichtung zu bewegen; und
eine weitere Klammer (114), die in Verbindung mit der Laufklammer betrieben werden kann, um Rohrleitungen mit einer Spannung auszugeben, die größer ist als die, die nur mit der Spannvorrichtung allein erzielbar ist.

11. Vorrichtung nach Anspruch 10, wobei das Hubmittel eine Winden- und Seilanordnung umfasst, die eine Abstützungsverbindung zum Rohrleitungsverlegeturm auf jeder Seite der Laufklammer bereitstellt.

12. Vorrichtung nach Anspruch 10 oder 11, wobei die Spannvorrichtung Spannvorrichtungen des Führungstyps umfasst.

13. Vorrichtung nach den Ansprüchen 10 bis 12, wobei die Laufklammer an einer Stelle unterhalb der Spannvorrichtung vorgesehen ist und wobei die weitere Klammer an einer Stelle oberhalb der Spannvorrichtung vorgesehen ist.

14. Vorrichtung nach den Ansprüchen 10 bis 13, wobei die weitere Klammer eine Abhängeklammer umfasst.

15. Vorrichtung nach den Ansprüchen 10 bis 13, wobei die weitere Klammer unter dem unteren Ende der Laufklammerhublänge vorgesehen ist.

## Revendications

1. Procédé de pose de pipeline sous-marin depuis un navire de pose à tambour, ce procédé comprenant :
la prévision d'une tour de pose de pipeline avec un appareil tendeur (112) pour recevoir un pipeline d'un tambour de stockage et pour saisir et tendre le pipeline afin de suspendre au moins une partie du pipeline tout en déroulant le pipeline du navire ;
la prévision d'une pince mobile (124) comme moyen auxiliaire pour suspendre au moins une partie du pipeline depuis le navire, cette pince mobile étant prévue sur un moyen de levage qui lui permet de se déplacer dans la direction de pose du pipeline le long d'essentiellement le même axe que l'appareil tendeur ; et
l'utilisation sélective de la pince mobile en association avec une autre pince (114) pour dérouler le pipeline à une tension plus grande que celle pouvant être obtenue avec l'appareil tendeur seul.

2. Procédé selon la revendication 1, comprenant en outre l'utilisation de l'appareil tendeur pour supporter une partie importante de la tension dans le pipeline suspendu, tout en supportant simultanément le reste dans la pince mobile.

3. Procédé selon la revendication 2, comprenant en outre l'utilisation de soit le tendeur, soit la pince mobile dans un mode de tension constante tandis que l'autre est utilisé dans un mode de vitesse constante.

4. Procédé selon la revendication 3, comprenant en outre l'application de la commande de tension constante à l'appareil tendeur, et l'application de la commande de vitesse constante à la pince mobile.

5. Procédé selon l'une quelconque des revendications précédentes, dans lequel, lorsqu'on utilise la pince mobile pour dérouler le pipeline, on utilise l'autre pince pour maintenir le pipeline immobile tandis que la pince mobile relâche le pipeline et retourne au sommet de sa course pour saisir de nouveau le pipeline et dérouler une autre partie.

6. Procédé selon la revendication 5, comprenant en outre la répétition des étapes des revendications 1 à 5 afin de fournir un déploiement semi-continu du pipeline depuis le navire.

7. Procédé selon l'une quelconque des revendications précédentes, comprenant l'étape consistant à prévoir la pince mobile en dessous de l'appareil tendeur.

8. Procédé selon l'une quelconque des revendications 1 à 6, comprenant l'étape consistant à prévoir la pince mobile au-dessus de l'appareil tendeur.

9. Procédé selon l'une quelconque des revendications précédentes, dans lequel le moyen de levage fait se déplacer la pince mobile sur une longueur qui permet à la pince mobile de se déplacer en dessous de la ligne de flottaison.

10. Appareil pour la pose de pipeline sous-marin depuis un navire, cet appareil comprenant :-
un tambour de stockage pour le pipeline préfabriqué ;
une tour de pose de pipeline (110) ;
un appareil tendeur (112) monté sur la tour pour recevoir un pipeline d'un tambour de stockage et pour saisir et tendre le pipeline afin de suspendre au moins une partie du pipeline tout en déroulant le pipeline du navire ;
une pince mobile (124) pouvant être utilisée comme moyen auxiliaire pour suspendre au moins une partie du pipeline depuis le navire, cette pince mobile étant prévue sur un moyen de levage qui lui permet de se déplacer dans la direction de pose du pipeline le long d'essentiellement le même axe que l'appareil tendeur ; et
une autre pince (114) pouvant être utilisée en conjonction avec la pince mobile pour dérouler le pipeline à une tension plus grande que celle pouvant être obtenue avec l'appareil tendeur seul.

11. Appareil selon la revendication 10, dans lequel le moyen de levage comprend un agencement treuil et câble qui fournit une connexion de support à la tour de pose de pipeline de chaque côté de la pince mobile.

12. Appareil selon l'une des revendications 10 ou 11, dans lequel l'appareil tendeur comprend des tendeurs de type chenille.

13. Appareil selon les revendications 10 à 12, dans lequel la pince mobile est prévue à un emplacement qui est en dessous de l'appareil tendeur et l'autre moyen pince est prévu à un emplacement qui est au-dessus de l'appareil tendeur.

14. Appareil selon les revendications 10 à 13, dans lequel l'autre moyen pince comprend une pince de suspension.

15. Appareil selon les revendications 10 à 12, dans lequel l'autre moyen pince est prévu en dessous du bas de la longueur de la course de la pince mobile.
